# EUROPEAN PATENT APPLICATION

(11) **EP 3 910 590 A2**
(43) Date of publication of application: **17.11.2021**
(21) Application number: 21197765.7
(22) Date of filing: 20.09.2021
(51) Int. Cl.: G06T 7/11, G06T 3/40, G06K 9/00

(54) **METHOD AND APPARATUS OF PROCESSING IMAGE, ELECTRONIC DEVICE, AND STORAGE MEDIUM**

(30) Priority: 31.03.2021 CN 202110358569
(71) Applicant: BEIJING BAIDU NETCOM SCIENCE TECHNOLOGY CO., LTD., No.10 Shangdi 10th Street Haidian District Beijing 100085 (CN)
(72) Inventor: DENG, Ruifeng, Beijing, 100085 (CN); LIN, Tianwei, Beijing, 100085 (CN); LI, Xin, Beijing, 100085 (CN); LI, Fu, Beijing, 100085 (CN)
(74) Representative: Zimmermann, Tankred Klaus

(57) **Abstract**

The present disclosure provides a method and an apparatus of processing image, an electronic device, and a storage medium, which relates to a field of artificial intelligence technology, and specifically relates to a computer vision and deep learning technology applied to an image acquisition scene. The method includes performing a saliency detection on an original image to obtain a saliency map of the original image; performing a semantic segmentation on the original image to obtain a semantic segmentation map of the original image; modifying the saliency map by using the semantic segmentation map, so as to obtain a target map containing a target object; and cropping the original image based on a position of the target object in the target map.

## Description

### TECHNICAL FIELD

The present disclosure relates to a field of artificial intelligence technology, and specifically relates to a computer vision and deep learning technology applied to an image acquisition scene, and in particular to a method and an apparatus of processing image, an electronic device, and a storage medium.

### BACKGROUND

As a scene of an image itself is changeable and content information of the image is diverse, a conventional intelligent cropping system often needs to integrate many technical modules, and needs to design complex processing logic to make the intelligent cropping technology as generalized as possible, and these may cause a computational complexity of the conventional intelligent cropping method to be high.

### SUMMARY

The present disclosure provides a method and an apparatus of processing image, an electronic device, and a storage medium.

According to an aspect of the present disclosure, a method of processing an image is provided, and the method includes: performing a saliency detection on an original image to obtain a saliency map of the original image; performing a semantic segmentation on the original image to obtain a semantic segmentation map of the original image; modifying the saliency map by using the semantic segmentation map, so as to obtain a target map containing a target object; and cropping the original image based on a position of the target object in the target map.

According to another aspect of the present disclosure, an apparatus of processing image is provided, and the apparatus includes: a saliency detection module configured to perform a saliency detection on an original image to obtain a saliency map of the original image; a semantic segmentation module configured to perform a semantic segmentation on the original image to obtain a semantic segmentation map of the original image; a modification module configured to modify the saliency map by using the semantic segmentation map, so as to obtain a target map containing a target object; and a cropping module configured to crop the original image based on a position of the target object in the target map.

According to another aspect of the present disclosure, an electronic device is provided, and the electronic device includes: at least one processor; and a memory communicatively connected to the at least one processor, wherein the memory stores instructions executable by the at least one processor, and the instructions, when executed by the at least one processor, cause the at least one processor to implement the method described above.

According to another aspect of the present disclosure, a non-transitory computer-readable storage medium having computer instructions stored thereon is provided, wherein the computer instructions, when executed by a computer, cause the computer to implement the method described above.

According to another aspect of the present disclosure, a computer program product containing a computer program, wherein the computer program, when executed by a processor, causes the processor to implement the method described above.

It should be understood that the content described in this section is not intended to identify the key or important features of the embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used to better understand the present disclosure and do not constitute a limitation to the present disclosure, in which:
FIG. 1 shows a flowchart of a method of processing an image according to an embodiment of the present disclosure;
FIG. 2 shows a flowchart of a method of processing an image according to another embodiment of the present disclosure;
FIG. 3 shows a flowchart of a method of processing an image according to another embodiment of the present disclosure;
FIGS. 4A, 4B, 4C, 4D, 4E, 4F and 4G show schematic diagrams of an example of a method of processing an image according to an embodiment of the present disclosure;
FIGS. 5A, 5B, 5C and 5D show schematic diagrams of another example of a method of processing an image according to an embodiment of the present disclosure;
FIG. 6 shows a flowchart of a method of processing an image according to another embodiment of the present disclosure;
FIGS. 7A, 7B, 7C, 7D and 7E show schematic diagrams of another example of a method of processing an image according to an embodiment of the present disclosure;
FIGS. 8A, 8B, 8C, 8D and 8E show schematic diagrams of another example of a method of processing an image according to an embodiment of the present disclosure;
FIG. 9 shows a block diagram of an apparatus of processing image according to an embodiment of the present disclosure; and
FIG. 10 shows a block diagram of an electronic device for implementing a method of processing an image according to an embodiment of the present disclosure.

### DETAILED DESCRIPTION OF EMBODIMENTS

The exemplary embodiments of the present disclosure are described below with reference to the accompanying drawings, which include various details of the embodiments of the present disclosure to facilitate understanding, and which should be considered as merely illustrative. Therefore, those ordinary skilled in the art should realize that various changes and modifications may be made to the embodiments described herein without departing from the scope and spirit of the present disclosure. In addition, for clarity and conciseness, descriptions of well-known functions and structures are omitted in the following description.

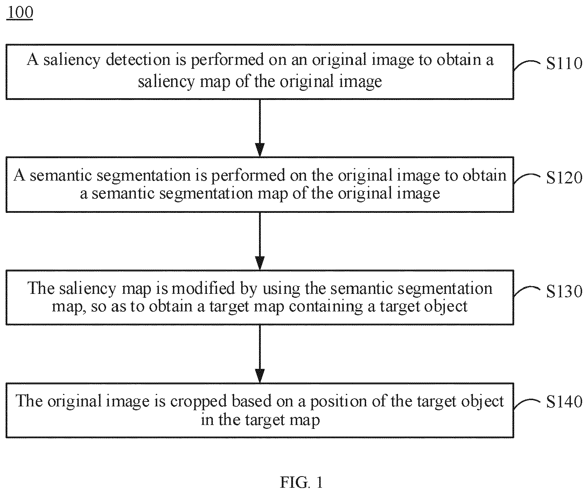

FIG. 1 shows a flowchart of a method of processing an image according to an embodiment of the present disclosure.

In step S110, a saliency detection is performed on an original image to obtain a saliency map of the original image. Various appropriate saliency detection methods may be used to detect the saliency of the original image. For example, a saliency detection model is used to detect the saliency of the original image to obtain the saliency map. The saliency map may be expressed as a gray-scale diagram. Gray levels of each pixel are concentrated near 0 and 255. The gray level of 0 is black, the gray level of 255 is white, and the gray level near 125 is gray. The obtained saliency map may reflect a salient portion of the original image.

In step S120, a semantic segmentation is performed on the original image to obtain a semantic segmentation map of the original image. Various appropriate semantic segmentation methods may be used to segment the original image. The semantic segmentation map includes a plurality of semantic regions, each of the plurality of semantic regions has a semantic label, and the semantic label indicates a semantic of a target subject in the original image corresponding to the semantic region. The obtained semantic segmentation map may reflect the semantic of the target subject in the original image. For example, if the semantic label is "person", it means that the target subject corresponding to the semantic region is a person; and if the semantic label is "car", it means that the target subject corresponding to the semantic region is a car.

In step S130, the saliency map is modified by using the semantic segmentation map, so as to obtain a target map containing a target object. By using the semantic segmentation map to modify the saliency map, the saliency portion of the original image may be modified in combination with a semantic feature, so that the target object in the obtained target map may more accurately reflect a position of the target subject in the original image.

In step S140, the original image is cropped based on a position of the target object in the target map. The position of the target object in the target map may reflect the position of the target subject in the original image. By cropping the original image based on the position of the target object, more accurate cropping may be achieved for the target subject.

Although the steps are described in a specific order in the above-mentioned embodiments, the embodiments of the present disclosure are not limited to this. For example, step S110 may be performed after step S120 or simultaneously with step S120, which is not limited by the embodiments of the present disclosure.

The embodiments of the present disclosure may provide accurate image cropping while reducing the computational complexity by combining saliency detection and semantic segmentation.

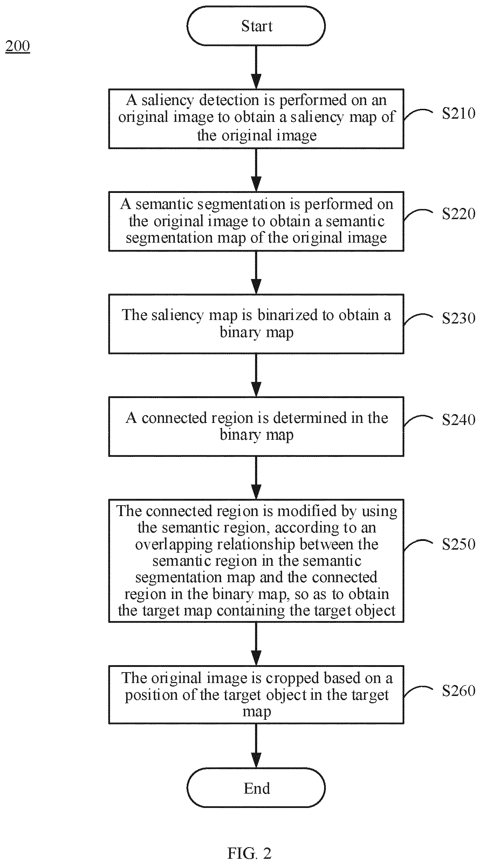

FIG. 2 shows a flowchart of a method of processing an image according to another embodiment of the present disclosure.

In step S210, a saliency detection is performed on an original image to obtain a saliency map of the original image.

In step S220, a semantic segmentation is performed on the original image to obtain a semantic segmentation map of the original image.

Steps S210 and S220 may be implemented in the same or similar manner as the above-mentioned steps S110 and S120, and will not be repeated here.

In step S230, the saliency map is binarized to obtain a binary map. The binary map contains only two gray levels of 0 and 255. Through the binarization processing, the subsequent processing is no longer disturbed by pixels of other gray levels, and a processing complexity is reduced.

In step S240, a connected region is determined in the binary map. For example, at least one white connected region (i.e., a connected region composed of pixels with gray level of 255) may be determined. The number of connected regions may be one or more, which depends on the content of the original image.

In step S250, the connected region is modified by using the semantic region, according to an overlapping relationship between the semantic region in the semantic segmentation map and the connected region in the binary map, so as to obtain the target map containing the target object. The overlapping relationship between the semantic region and the connected region may reflect a common portion and a difference portion between a saliency detection result and a semantic segmentation result. By using the semantic region to modify the connected region based on the overlapping relationship may cause the connected region to reflect the position of the target subject in the original image more accurately, thereby improving the accuracy of cropping.

In step S260, the original image is cropped based on a position of the target object in the target map.

The embodiments of the present disclosure may provide accurate image cropping while reducing the computational complexity by combining saliency detection and semantic segmentation. The embodiments of the present disclosure may improve the accuracy of cropping by modifying the connected region according to the overlapping relationship between the semantic region in the semantic segmentation map and the connected region in the binary map.

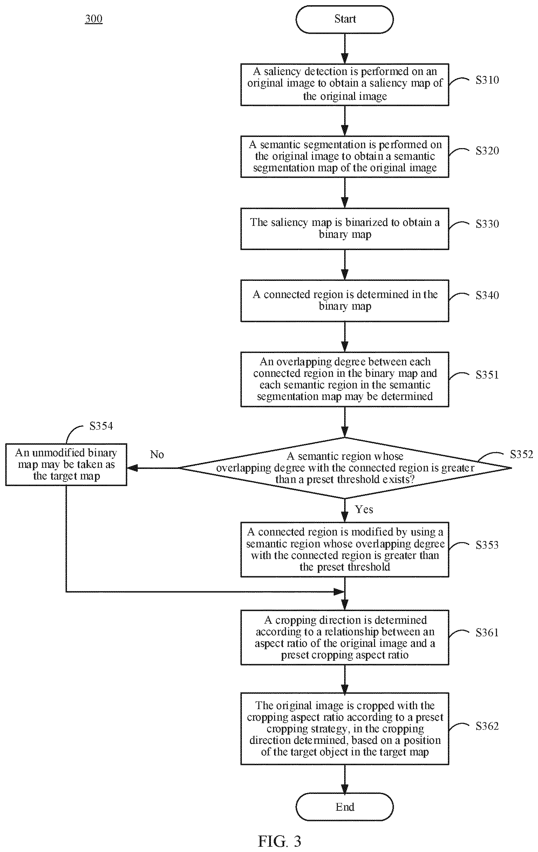

FIG. 3 shows a flowchart of a method of processing an image according to another embodiment of the present disclosure.

In step S310, a saliency detection is performed on an original image to obtain a saliency map of the original image.

In step S320, a semantic segmentation is performed on the original image to obtain a semantic segmentation map of the original image.

In step S330, the saliency map is binarized to obtain a binary map. The binary map contains only two gray levels of 0 and 255. Through the binarization processing, the subsequent processing is no longer disturbed by pixels of other gray levels, and a processing complexity is reduced.

In step S340, a connected region is determined in the binary map. For example, at least one white connected region (i.e., a connected region composed of pixels with gray level of 255) may be determined. The number of connected regions may be one or more, which depends on the content of the original image.

Steps S310 to S340 may be implemented in the same or similar manner as steps S210 to S240 described above, and will not be repeated here.

After determining the connected region in the binary map, by performing the following steps S351 to S354, the connected region may be modified by using the semantic region, according to an overlapping relationship between the semantic region in the semantic segmentation map and the connected region in the binary map.

In step S351, an overlapping degree between each connected region in the binary map and each semantic region in the semantic segmentation map may be determined.

In some embodiments, an intersection over union or a proportion of the each connected region with respect to the each semantic region may be calculated as the overlapping degree. In other embodiments, a ratio (also referred to as a proportion) of an area of a part of the each semantic region located in the each connected region to an area of the each connected region may be calculated as the overlapping degree. In other embodiments, the overlapping degree may also be calculated based on the intersection over union and the proportion.

In step S352, whether a semantic region whose overlapping degree with the connected region is greater than a preset threshold exists or not is determined. If the semantic region whose overlapping degree with the connected region is greater than a preset threshold exists, executing step S353; and if the semantic region whose overlapping degree with the connected region is greater than a preset threshold does not exist, executing step S354. For example, if an overlapping degree between a semantic region and a connected region is greater than the preset threshold, executing step S353, otherwise continue to determine whether a semantic region whose overlapping degree with the connected region is greater than a preset threshold exists or not. After determining the overlapping degree between all connected regions and all semantic regions, if it is determined that there is no semantic region whose overlapping degree with the connected region is greater than the preset threshold, executing step S354.

In step S353, a connected region is modified by using a semantic region whose overlapping degree with the connected region is greater than the preset threshold. For example, if the connected region has a missing portion relative to the semantic region, supplementing the missing portion to the connected region; and if the connected region has a redundant portion relative to the semantic region, removing the redundant portion from the connected region based on the semantic region. After modifying the binary map, the target map is obtained. The modified connected region in the binary map is used as the target object in the target map, which corresponds to the target subject (such as a person or an object) in the original image. In subsequent cropping, the original image will be cropped based on the principle of containing the target subject. Therefore, the target object in the target map plays a reference role in cropping.

In step S354, an unmodified binary map may be taken as the target map, and proceeding to step S361. As no semantic region whose overlapping degree with the connected region is greater than a preset threshold is determined in step S352, which means that no appropriate semantic region may be used to modify the binary map, the unmodified binary map may be used as the target map to perform subsequent processing.

After obtaining the target map through step S353 or S354, the original image may be cropped based on the position of the target object in the target map by performing the following steps S361 and S362.

In step S361, a cropping direction is determined according to a relationship between an aspect ratio of the original image and a preset cropping aspect ratio. For example, in response to the aspect ratio of the original image being greater than the preset cropping aspect ratio, determining a height direction of the original image as the cropping direction; and in response to the aspect ratio of the original image being less than the preset cropping aspect ratio, determining a width direction of the original image as the cropping direction.

In step S362, the original image is cropped with the cropping aspect ratio according to a preset cropping strategy, in the cropping direction determined, based on a position of the target object in the target map. In some embodiments, the cropping strategy may include at least one of the first strategy and the second strategy.

In the first strategy, cropping is performed by using the top of the target object as a reference, which is applicable to the target subject that reflects basic features of the image in a height direction of an image, such as a person, a tree, a building, etc. In practice, most of the target subjects reflect basic features in the height direction of the image, and thus the first strategy has a relatively wide range of application. According to the first strategy, the top of the target object may be determined in the target map. Then, in the target map, the cropping region containing the target object is determined according to the cropping aspect ratio by using the top of the target object as a reference. After determining the cropping region, an image region mapped to the cropping region may be extracted from the original image as a cropping result.

In the second strategy, cropping is performed by using a center point of the target object in a width direction as a reference, which is applicable to the target subject that reflects the basic features in a width direction of an image, such as a car. According to the second strategy, the center point of the target object in the width direction may be determined in the target map. Then, the cropping region including the target object is determined according to the cropping aspect ratio by using the center point as a reference. After determining the cropping region, an image region mapped to the determined cropping region may be extracted from the original image as a cropping result.

In some embodiments, the original image may be cropped based on the first strategy and the second strategy respectively, and the cropping result obtained based on the first strategy is compared with the cropping result obtained based on the second strategy, and the cropping result with a larger area of connected region is taken as the final cropping result.

By adopting the above-mentioned first strategy and/or second strategy, the embodiments of the present disclosure may realize fast intelligent cropping in a simpler manner.

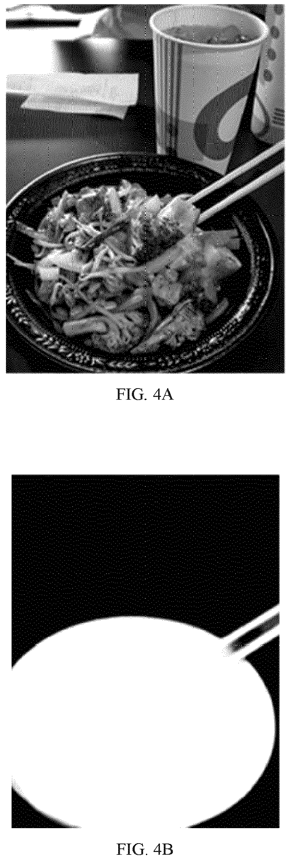

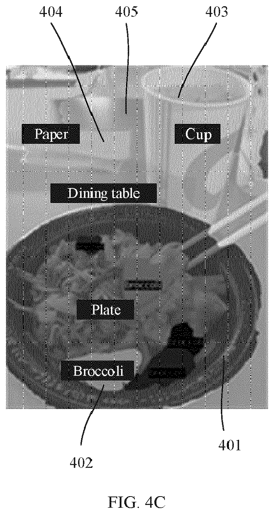

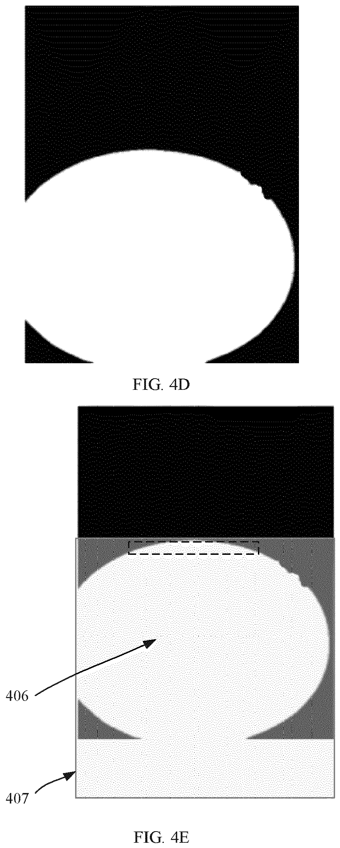

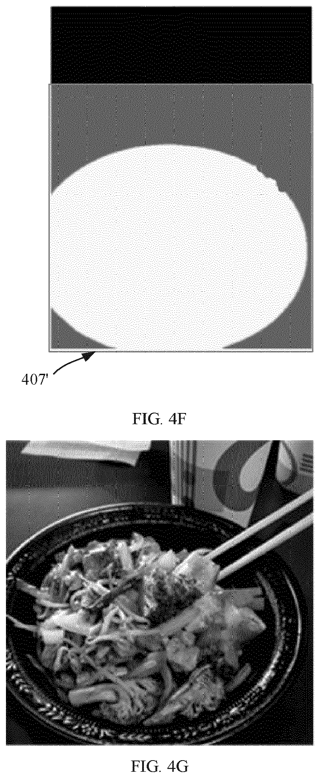

FIGS. 4A, 4B, 4C, 4D, 4E, 4F and 4G are schematic diagrams of an example of a method of processing an image according to an embodiment of the present disclosure.

By performing a saliency detection on an original image as shown in FIG. 4A, a saliency map as shown in FIG. 4B may be obtained. FIG. 4B is a gray-scale diagram. Pixel values of most pixels are concentrated near 0 and 255, showing white, black and gray respectively. As can be seen from a white region in the saliency map of FIG. 4B, a part about the plate and chopsticks in the original image of FIG. 4A is a saliency region. In some embodiments, the salient map of FIG. 4B may also be binarized to obtain a binary map. The binary map contains only two pixel values of 0 and 255 for subsequent analysis and processing.

By performing semantic segmentation on the original image of FIG. 4A, a semantic segmentation map as shown in FIG. 4C may be obtained. As shown in FIG. 4C, the semantic segmentation map includes a plurality of semantic regions, such as a semantic region 401 with a semantic label "plate" (indicating that its corresponding subject is a plate), a semantic region 402 with a semantic label "broccoli" (indicating that its corresponding subject is broccoli), and a semantic region 403 with a semantic label "cup" (indicating that its corresponding subject is a cup), a semantic region 404 with a semantic label "paper" (indicating that its corresponding subject is paper), and a semantic region with a semantic label "dining table" (indicating that its corresponding subject is dining table). In order to simplify the description, some semantic regions in FIG. 4C are not marked here, and the unmarked semantic regions have similar features, which will not be repeated here.

A connected region may be determined in FIG. 4B (or in the binary map of FIG. 4B). In this embodiment, the white region formed by the plate and chopsticks is the connected region. Then, the white connected region is modified by using the semantic segmentation map shown in FIG. 4C. For example, an intersection over union between the white connected region in FIG. 4B and each semantic region in FIG. 4C is calculated. Here, the so-called intersection over union is a ratio of pixel intersection and pixel union between two images, which may reflect the overlapping degree of the two images. Through calculation, it may be concluded that the intersection over union between the semantic region 401 of the plate in FIG. 4C and the white connected region in FIG. 4B exceeds a preset threshold. Therefore, the semantic region 401 in FIG. 4C may be used to modify the white connected region in FIG. 4B. For example, the white connected region in FIG. 4B has a redundant portion relative to the semantic region 401 in FIG. 4C, that is, a portion corresponding to chopsticks is redundant. Therefore, the portion corresponding to chopsticks is removed in the modification process to obtain a target map as shown in FIG. 4D. In the target map of FIG. 4D, the modified white region no longer contains the portion corresponding to the chopsticks, and the modified white region may be used as the target object for subsequent cropping.

The cropping process is described below with reference to FIGS. 4E to 4G.

As shown in FIG. 4E, in a case that a preset cropping aspect ratio is 1:1, and an aspect ratio of the original image and its corresponding binary map is 3:2, that is, the cropping aspect ratio is less than the aspect ratio of the original image. Therefore, a width direction of the image is determined as the cropping direction, that is, the original image will be cropped in the width direction. In the binary map of FIG. 4E, the top of the target object 406 (as shown by the dotted line box) is determined, that is, a starting line of the pixels with the pixel value of 255. The number of starting lines may be set as desired, for example, one or more lines. Starting from the top of the target object 406 and facing the bottom of the target object 406, a cropping region 407 is determined according to the cropping aspect ratio of 1:1.

In FIG. 4E, since the determined cropping region 407 exceeds the boundary of the target map, the cropping region 407 is moved upward until the bottom of the cropping region 407 is flush with the bottom edge of the target map, so as to obtain a new cropping region 407', as shown in FIG. 4F.

In the original image of FIG. 4A, an image region mapped to the new cropping region 407' in FIG. 4F is extracted to obtain the cropping result as shown in FIG. 4G.

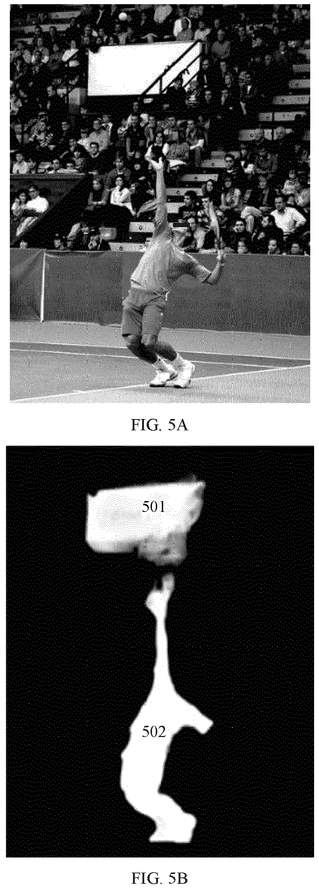

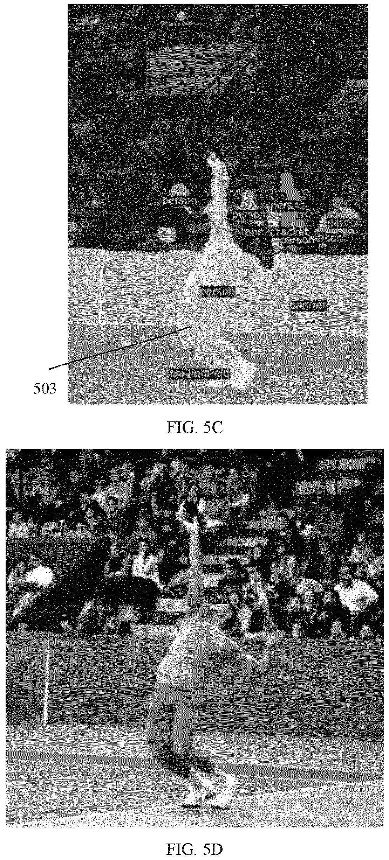

FIGS. 5A, 5B, 5C and 5D are schematic diagrams of another example of a method of processing an image according to an embodiment of the present disclosure.

By performing saliency detection and semantic segmentation on an original image as shown in FIG. 5A, a saliency map as shown in FIG. 5B and a semantic segmentation map as shown in FIG. 5C are obtained. The saliency map of FIG. 5B includes two connected regions 501 and 502, corresponding to the billboard and the athlete in the original image respectively. In the semantic segmentation map of FIG. 5C, the billboard in the original image is recognized as a semantic region indicating the background, and the athlete is recognized as a semantic region 503 indicating a person (i.e., a semantic label is "person"). An overlapping degree between the semantic region 503 in FIG. 5C and the connected region 502 in FIG. 5B exceeds the preset threshold. For the connected region 501, there is no semantic region whose overlapping degree with the connected region 501 exceeds the threshold in FIG. 5C. Therefore, the connected region 501 is deleted in FIG. 5B. The cropping as described above is performed based on a position of the connected region 502 to obtain the cropping result as shown in FIG. 5D.

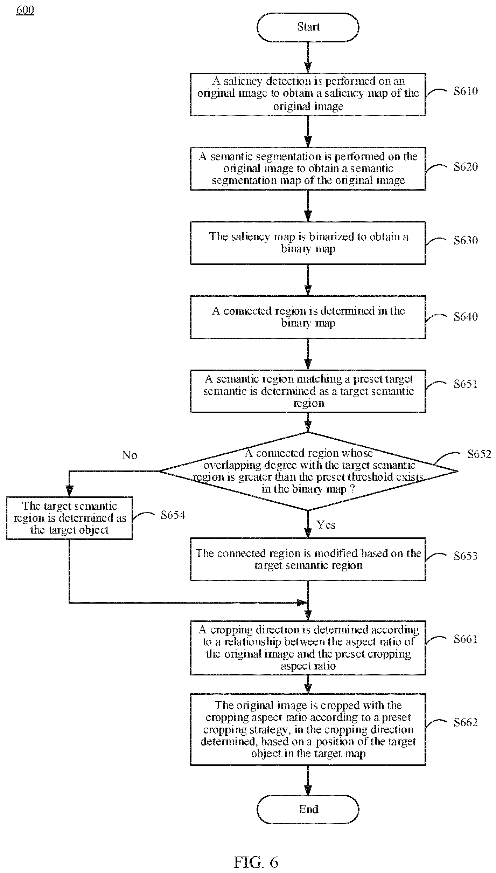

FIG. 6 is a flowchart of a method of processing an image according to another embodiment of the present disclosure.

In step S610, a saliency detection is performed on an original image to obtain a saliency map of the original image.

In step S620, a semantic segmentation is performed on the original image to obtain a semantic segmentation map of the original image.

In step S630, the saliency map is binarized to obtain a binary map.

In step S640, a connected region is determined in the binary map. For example, at least one white connected region (i.e., a connected region composed of pixels with a pixel value of 255) may be determined.

The above-mentioned steps S610 to S640 may be implemented in the same or similar manner as steps S310 to S340, and will not be repeated here.

After determining the connected region in the binary map, the connected region may be modified by using the semantic region according to an overlapping relationship between the semantic region in the semantic segmentation map and the connected region in the binary map by performing the following steps S651 to S654.

In step S651, a semantic region matching a preset target semantic is determined as a target semantic region. If the preset target semantic is "person", the semantic region with the semantic label "person" in the semantic segmentation map is determined as the target semantic region. After determining the target semantic region, the connected region in the binary map may be modified based on the target semantic region according to the overlapping relationship between the target semantic region and the connected region in the binary map, so that a region in which the person is located as the target subject may be extracted from the original image for cropping.

In step S652, whether a connected region whose overlapping degree with the target semantic region is greater than the preset threshold exists in the binary map or not is determined. If so, executing step S653; and if not, executing step S654.

In step S653, the connected region is modified based on the target semantic region. For example, the connected region whose overlapping degree with the target semantic region is greater than the preset threshold is retained, and other connected regions are removed.

In step S654, the target semantic region is determined as the target object, and proceeding to step S661. Since no connected region whose overlapping degree is greater than the preset threshold is determined in step S652, that is, no connected region corresponding to the target semantic (e.g. person) exists in the saliency map, a new target map may be generated based on the target semantic region as the target object, so as to ensure that the cropping is performed with the "person" as the subject.

In step S661, a cropping direction is determined according to a relationship between the aspect ratio of the original image and the preset cropping aspect ratio.

In step S662, the original image is cropped with the cropping aspect ratio according to a preset cropping strategy, in the cropping direction determined, based on a position of the target object in the target map.

The above-mentioned steps S661 and S662 may be implemented in the same or similar manner as steps S361 and S362, respectively, and will not be repeated here.

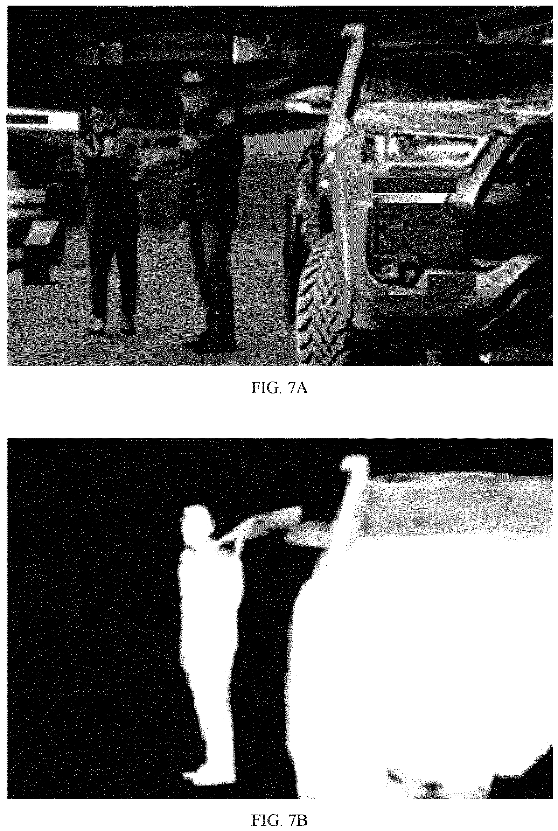

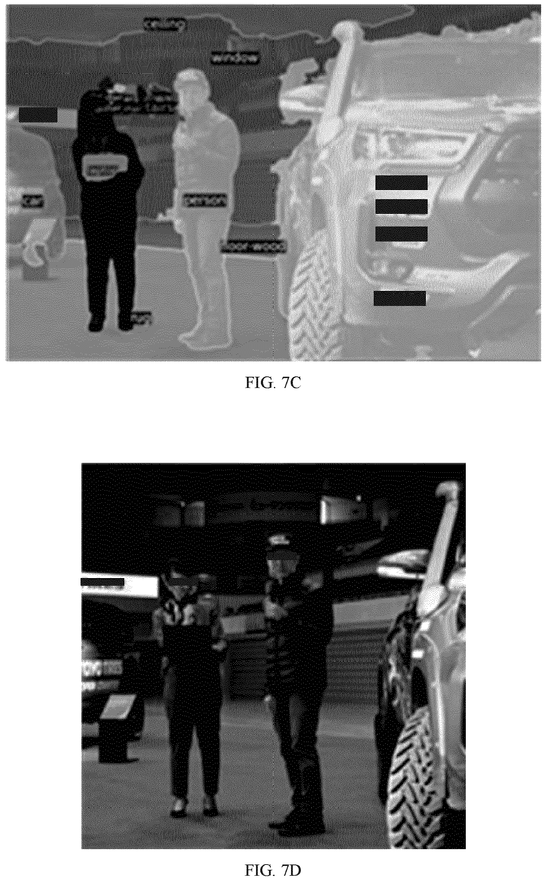

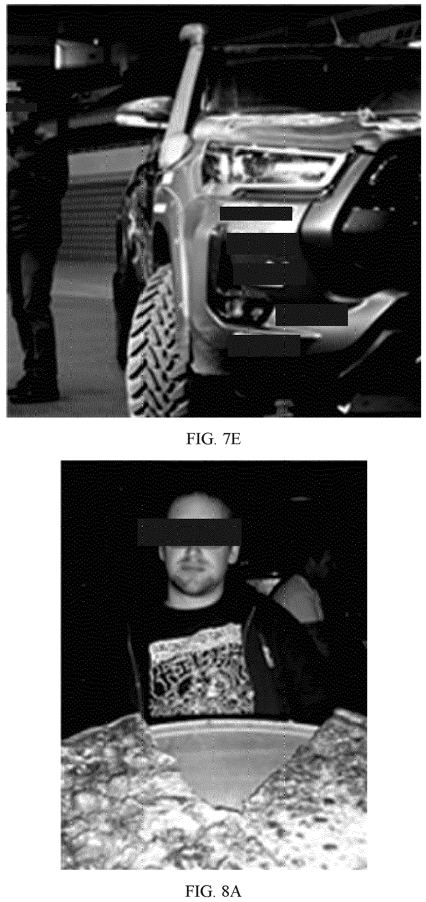

FIGS. 7A, 7B, 7C, 7D and 7E are schematic diagrams of another example of a method of processing an image according to an embodiment of the present disclosure.

By using the method described above with reference to FIG. 6, saliency detection and semantic segmentation are performed on an original image shown in FIG. 7A, respectively, to obtain a saliency map shown in FIG. 7B and a semantic segmentation map shown in FIG. 7C.

As can be seen from FIG. 7B, the saliency map includes a white connected region corresponding to a person and a white connected region corresponding to a car. As can be seen from FIG. 7C, semantic regions of various objects in the image are recognized through semantic segmentation, including semantic regions corresponding to persons and semantic regions corresponding to cars.

If the preset target semantic is "person", that is, a user wants to crop with the person as the subject, a connected region whose overlapping degree with the semantic region indicating the person in FIG. 7C is greater than the preset threshold may be determined in FIG. 7B, that is, a white connected region in the middle of the image in FIG. 7B. The cropping position is determined based on the connected region, and the cropping result as shown in FIG. 7D is obtained.

Similarly, if the preset target semantic is "car", a connected region whose overlapping degree with the semantic region indicating the car in FIG. 7C is greater than the preset threshold may be determined in FIG. 7B, that is, a white connected region on the right in FIG. 7B. The cropping position is determined based on the connected region, and the cropping result as shown in FIG. 7E is obtained.

In this embodiment, the aspect ratio of the original image is 2:3, and the preset cropping aspect ratio is 1:1, that is, the cropping aspect ratio is greater than the aspect ratio of the original image, and thus a height direction is determined as the cropping direction. A second strategy is adopted for cropping. According to the second strategy, taking the white connected region corresponding to the car as an example, a start column and an end column of the white connected region are determined, and a midpoint of a connection line between the start column and the end column is taken as a center point in the width direction of the target object (i.e. the white connected region corresponding to the car). Taking the center point as the center, half the image height is extended to the left and right sides respectively to obtain the cropping region. Since the car is located on the rightmost side of the image, the resulting cropping region exceeds the right boundary of FIG. 7B. In this case, the cropping region is moved to the left, and the original image of FIG. 7A is cropped using the new cropping region to obtain the cropping result as shown in FIG. 7E.

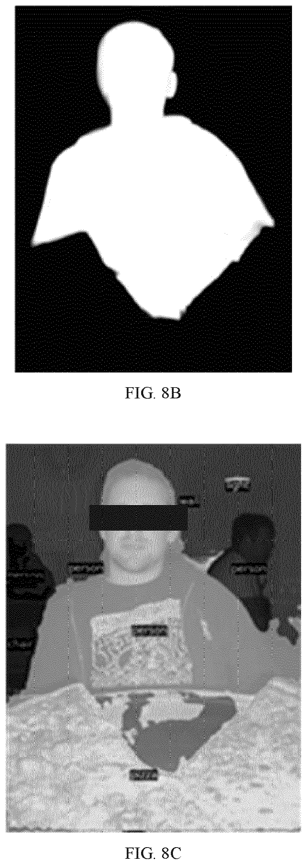

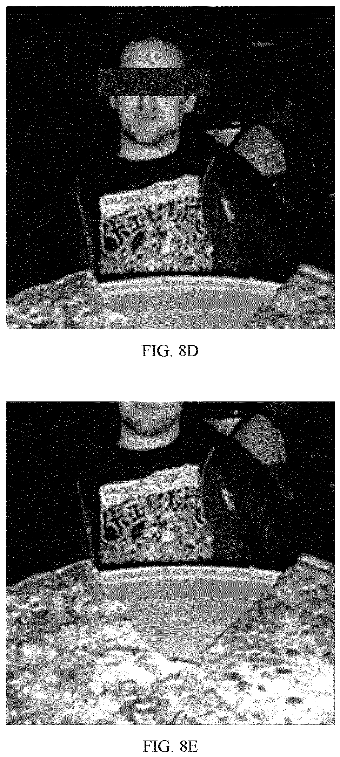

FIGS. 8A, 8B, 8C, 8D and 8E are schematic diagrams of another example of a method of processing an image according to an embodiment of the present disclosure.

An original image shown in FIG. 8A includes a person and a pizza. As shown in FIG. 8B, only the target object corresponding to the person is included in the saliency map of the original image. As shown in FIG. 8C, a semantic region corresponding to the person and a semantic region corresponding to the pizza are recognized in the semantic segmentation map of the original image.

If the "person" is used as the subject for cropping, the position of the target object may be determined according to the semantic region (i.e., the semantic region indicating the person) whose overlapping degree with the white connected region of FIG. 8B in FIG. 8C meets a preset requirement, so as to obtain the cropping result as shown in FIG. 8D.

As shown in the figure, if the "pizza" is used as the subject for cropping, it is determined that no white connected region overlapping with the semantic region of pizza in FIG. 8C exists in FIG. 8B. In this case, the semantic region indicating the pizza in FIG. 8C may be used as the target object to determine the cropping region, so as to obtain the cropping result as shown in FIG. 8E.

The embodiments of the present disclosure may provide accurate image cropping while reducing the computational complexity by combining saliency detection and semantic segmentation. According to the embodiments of the present disclosure, the cropping subject may also be set as desired, such as setting a person or car as the cropping subject. By means of semantic segmentation, cropping centered on a preset subject may be realized, so as to realize customized intelligent image cropping and improve the user experience. The method of processing the image proposed in the embodiments of the present disclosure is applicable to various application scenarios, such as automatically generating thumbnails of various photos for user albums, or automatically generating social network avatars according to photos provided by users, and so on.

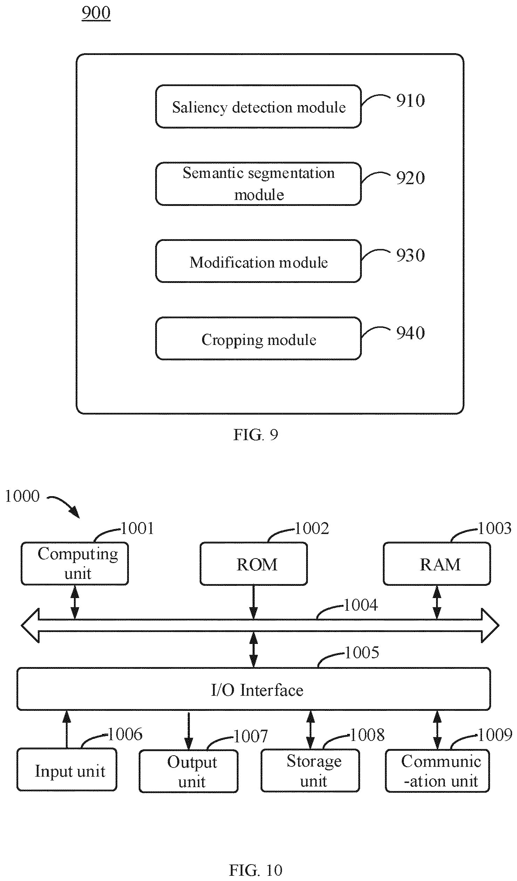

FIG. 9 is a block diagram of an apparatus of processing an image according to an embodiment of the present disclosure.

As shown in FIG. 9, the apparatus 900 of processing an image includes a saliency detection module 910, a semantic segmentation module 920, a modification module 930, and a cropping module 940.

The saliency detection module 910 is used to perform a saliency detection on an original image to obtain a saliency map of the original image.

The semantic segmentation module 920 is used to perform a semantic segmentation on the original image to obtain a semantic segmentation map of the original image.

The modification module 930 is used to modify the saliency map by using the semantic segmentation map, so as to obtain a target map containing a target object.

The cropping module 940 is used to crop the original image based on a position of the target object in the target map.

The embodiments of the present disclosure may provide accurate image cropping while reducing the computational complexity by combining saliency detection and semantic segmentation.

According to the embodiments of the present disclosure, the present disclosure further provides an electronic device, a readable storage medium and a computer program product. By combining saliency detection and semantic segmentation for image cropping, it may reduce the computational complexity and provide accurate image cropping.

FIG. 10 shows a schematic block diagram of an electronic device 1000 for implementing the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components, connections and relationships between the components, and functions of the components in the present disclosure are merely examples, and are not intended to limit the implementation of the present disclosure described and/or required herein.

As shown in FIG. 10, the electronic device 1000 includes a computing unit 1001, which may perform various appropriate actions and processing based on a computer program stored in a read-only memory (ROM) 1002 or a computer program loaded from a storage unit 1008 into a random access memory (RAM) 1003. Various programs and data required for the operation of the electronic device 1000 may be stored in the RAM 1003. The computing unit 1001, the ROM 1002 and the RAM 1003 are connected to each other through a bus 1004. An input/output (I/O) interface 1005 is also connected to the bus 1004.

Various components in the electronic device 1000, including an input unit 1006 such as a keyboard, a mouse, etc., an output unit 1007 such as various types of displays, speakers, etc., a storage unit 1008 such as a magnetic disk, an optical disk, etc., and a communication unit 1009 such as a network card, a modem, a wireless communication transceiver, etc., are connected to the I/O interface 1005. The communication unit 1009 allows the electronic device 1000 to exchange information/data with other devices through a computer network such as the Internet and/or various telecommunication networks.

The computing unit 1001 may be various general-purpose and/or special-purpose processing components with processing and computing capabilities. Some examples of the computing unit 1001 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 1001 executes the various methods and processes described above, such as the method of processing an image. For example, in some embodiments, the method of processing an image may be implemented as a computer software program, which is tangibly contained in a machine-readable medium, such as the storage unit 908. In some embodiments, a part or all of the computer programs may be loaded into and/or installed on the electronic device 1000 via the ROM 1002 and/or the communication unit 1009. When the computer program is loaded into the RAM 1003 and executed by the computing unit 1001, one or more steps of the method of processing an image described above may be executed. Alternatively, in other embodiments, the computing unit 1001 may be configured to perform the method of processing an image in any other suitable manner (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard parts (ASSP), a system on chip (SOC), a complex programming logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program codes used to implement the method of the present disclosure may be written in any combination of one or more programming languages. These program codes may be provided to a processor or a controller of a general-purpose computer, a dedicated computer or other programmable data processing devices, so that when the program codes are executed by the processor or the controller, functions/operations specified in the flowchart and/or the block diagram may be implemented. The program codes may be executed entirely or partly on the machine, or executed partly on the machine and partly executed on a remote machine as an independent software package, or executed entirely on the remote machine or a server.

In the context of the present disclosure, the machine-readable medium may be a tangible medium, which may contain or store a program for use by or in combination with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, device or apparatus, or any suitable combination thereof. More specific examples of the machine-readable storage medium may include one or more wire-based electrical connection, portable computer disk, hard disk, random access memory (RAM), read-only memory (ROM), erasable programmable read-only memory (EPROM or flash memory), optical fiber, portable compact disk read-only memory (CD-ROM), optical storage device, magnetic storage device, or any suitable combination thereof.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the systems and technologies described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), internet and a block-chain network.

The computer system may include a client and a server. The client and the server are generally far away from each other and usually interact through a communication network. The relationship between the client and the server is generated through computer programs running on the corresponding computers and having a client-server relationship with each other. It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method (100) of processing an image, comprising:
performing (S110) a saliency detection on an original image to obtain a saliency map of the original image;
performing (S120) a semantic segmentation on the original image to obtain a semantic segmentation map of the original image;
modifying (S130) the saliency map by using the semantic segmentation map, so as to obtain a target map containing a target object; and
cropping (S140) the original image based on a position of the target object in the target map.

2. The method according to claim 1, wherein the semantic segmentation map comprises at least one semantic region, and
wherein said modifying the saliency map by using the semantic segmentation map comprises:
binarizing (S230) the saliency map to obtain a binary map;
determining (S240) a connected region in the binary map; and
modifying (S250) the connected region by using the semantic region, according to an overlapping relationship between the semantic region in the semantic segmentation map and the connected region in the binary map.

3. The method according to claim 2, wherein said modifying the connected region by using the semantic region, according to an overlapping relationship between the semantic region in the semantic segmentation map and the connected region in the binary map comprises:
determining an overlapping degree between each connected region in the binary map and each semantic region of the at least one semantic region in the semantic segmentation map;
modifying the connected region by using a semantic region whose overlapping degree with the connected region is greater than a preset threshold; and
determining the connected region modified as the target object.

4. The method according to claim 3, wherein said modifying the connected region by using a semantic region whose overlapping degree with the connected region is greater than a preset threshold comprises:
in response to the connected region having a missing portion relative to the semantic region, supplementing the missing portion to the connected region; and
in response to the connected region having a redundant portion relative to the semantic region, removing the redundant portion from the connected region.

5. The method according to claim 3, wherein said determining an overlapping degree between each connected region in the binary map and each semantic region of the at least one semantic region in the semantic segmentation map comprises:
calculating an intersection over union of the each connected region with respect to the each semantic region as the overlapping degree.

6. The method according to claim 3, wherein said determining an overlapping degree between each connected region in the binary map and each semantic region of the at least one semantic region in the semantic segmentation map comprises:
calculating a ratio of an area of a part of the each semantic region located in the each connected region to an area of the each connected region as the overlapping degree.

7. The method according to claim 2, wherein said modifying the connected region by using the semantic region, according to an overlapping relationship between the semantic region in the semantic segmentation map and the connected region in the binary map comprises:
determining a semantic region that matches a preset target semantic; and
modifying the connected region by using the semantic region matched, according to an overlapping relationship between the semantic region matched and the connected region in the binary map.

8. The method according to any one of claims 1 to 7, wherein said cropping the original image based on a position of the target object in the target map comprises:
determining a cropping direction according to a relationship between an aspect ratio of the original image and a preset cropping aspect ratio; and
cropping the original image with the cropping aspect ratio according to a preset cropping strategy, in the cropping direction determined, based on a position of the target object in the target map.

9. The method according to claim 8, wherein said determining a cropping direction comprises:
in response to the aspect ratio of the original image being greater than the preset cropping aspect ratio, determining a height direction of the original image as the cropping direction; and
in response to the aspect ratio of the original image being less than the preset cropping aspect ratio, determining a width direction of the original image as the cropping direction.

10. The method according to claim 8, wherein the cropping strategy comprises a first strategy, and
wherein said cropping the original image with the cropping aspect ratio according to the first strategy comprises:
determining a top of the target object in the target map;
determining, in the target map, a cropping region containing the target object according to the cropping aspect ratio, by using the top of the target object as a reference; and
extracting, from the original image, an image region mapped to the cropping region, as a cropping result.

11. The method according to claim 8, wherein the cropping strategy comprises a second strategy, and
wherein said cropping the original image with the cropping aspect ratio according to the second strategy comprises:
determining, in the target map, a center point of the target object in a width direction;
determining a cropping region containing the target object according to the cropping aspect ratio, by using the center point as a reference; and
extracting, from the original image, an image region mapped to the cropping region, as a cropping result.

12. An apparatus (900) of processing an image, comprising:
a saliency detection module (910) configured to perform a saliency detection on an original image to obtain a saliency map of the original image;
a semantic segmentation module (920) configured to perform a semantic segmentation on the original image to obtain a semantic segmentation map of the original image;
a modification module (930) configured to modify the saliency map by using the semantic segmentation map, so as to obtain a target map containing a target object; and
a cropping module (940) configured to crop the original image based on a position of the target object in the target map.

13. An electronic device, comprising:
at least one processor; and
a memory communicatively connected to the at least one processor,
wherein the memory stores instructions executable by the at least one processor, and the instructions, when executed by the at least one processor, cause the at least one processor to implement the method according to any one of claims 1 to 11.

14. A non-transitory computer-readable storage medium having computer instructions stored thereon, wherein the computer instructions, when executed by a computer, cause the computer to implement the method according to any one of claims 1 to 11.

15. A computer program product containing a computer program, wherein the computer program, when executed by a processor, causes the processor to implement the method according to any one of claims 1 to 11.
